# EUROPEAN PATENT APPLICATION

(11) **EP 3 654 683 A1**
(43) Date of publication of application: **20.05.2020**
(21) Application number: 18306486.4
(22) Date of filing: 13.11.2018
(51) Int. Cl.: H04W 12/04, H04W 12/00, H04L 29/06, H04W 12/06

(54) **A METHOD FOR SHARING A SECURITY CONTEXT WITH A PLURALITY OF CONNECTED DEVICES BELONGING TO A GROUP**

(71) Applicant: Thales Dis France SA, 92190 Meudon (FR); Gemalto M2M GmbH, 81541 Munich (DE)
(72) Inventor: SIMON, Carsten, 16761 Hennigsdorf (DE); FINE, Jean-Yves, 92190 MEUDON (FR); DAO, Frederic, 92190 MEUDON (FR); DUPREZ, Jérôme, 92190 MEUDON (FR); DENZIN, Florian, 10965 Berlin (DE); DANY, Vincent, 92190 MEUDON (FR); PHAN, Ly Thanh, 92190 MEUDON (FR); BREUER, Volker, 16727 BOETZOW (DE)
(74) Representative: Delaval, Guillaume Laurent

(57) **Abstract**

This invention related to a method for sharing by a wireless communication network a security context with a plurality of connected devices belonging to a group, the security context comprising at least one data element used to secure data exchanges between the connected devices and the wireless communication network, the security context being broadcasted enciphered by the wireless communication network using a broadcast channel such that only the connected devices belonging to the same group are able to read it, the method comprising the following steps: authenticating (200) a subscription used by a given connected device CD requesting access to the wireless communication network and belonging to a given group G, the connected device CD being considered as registered by the network in case of successful authentication; providing (204) the registered connected device CD with a set KRG of at least one security key associated to this group G, this set KRG allowing the connected device G to decipher the at least one data element of the security context associated to group G, and to use the at least one data element to exchange data with the network without requiring further authentication.

## Description

### TECHNICAL FIELD

The present invention relates to a method for sharing a security context with a plurality of connected devices belonging to a group. It is applicable to the technical domain of securing data exchanges between a wireless communication network and a plurality of connected devices.

### BACKGROUND OF THE INVENTION

According to the Recommendation ITU-T Y.2060 provided by the International Telecommunication institute, the Internet of things (IoT) is defined as a global infrastructure for the information society, enabling advanced services by interconnecting physical and virtual things based on existing and evolving interoperable information and communication technologies. A thing is an object of the physical world (physical things) or the information world (virtual things), which is capable of being identified and integrated into wireless communication networks. At present, IoT is generally applied in fields such as security surveillance, automatic vending machines, public traffic systems, vehicle monitoring and management, industry process automatization, motor machineries, city informationalization.

As underlined in the report "Mobile IoT in the 5G Future" published by the GSM association (GSMA) in May 2018, massive loT is one of three principal 5G use cases that will enable developments such as smart cities and industrial automation. The International Telecommunication Union (ITU) defined requirements for massive loT, namely improved network coverage, long device operational lifetime and a high density of connections.

NB-IoT and LTE-M are considered as 5G technologies well adapted for IoT with available 3GPP specifications published addressing Low Power Wide Area (LPWA) requirements. LTE-M is an acronym referring to Long-Term Evolution (LTE) machine-type communications (MTC) while NB-IoT is an acronym of Narrowband IoT. These technologies will coexist with other 5G technologies.

5G technologies aim at delivering services to billions of new devices providing complete IoT connectivity. Massive IoT in 5G will generate massive signalling load over radio and core networks if existing standard procedures are used.

Therefore, there is a need for a method allowing to reduce signalling overload for wireless telecommunications involving a plurality of connected devices.

### SUMMARY OF THE INVENTION

This invention relates to a method for sharing by a wireless communication network a security context with a plurality of connected devices belonging to a group, the security context comprising at least one data element used to secure data exchanges between the connected devices and the wireless communication network, the security context being broadcasted enciphered by the wireless communication network using a broadcast channel such that only the connected devices belonging to the same group are able to read it, the method comprising the following steps:
- authenticating a subscription used by a given connected device CD requesting access to the wireless communication network and belonging to a given group G, the connected device CD being considered as registered by the network in case of successful authentication;
- providing the registered connected device CD with a set KRG of at least one security key associated to this group G, this set KRG allowing the connected device G to decipher the at least one data element of the security context associated to group G, and to use the at least one data element to exchange data with the network without requiring further authentication.

According to an example, a group comprises a plurality of connected devices associated to a group identifier identical for all members of the group.

According to an example, a group is managed by a network element belonging to the wireless communication network using a list of subscriber identifier.

According to an example, the subscription identifiers of said list are International Mobile Subscriber Identifiers IMSI.

According to an example, the method comprises the step of adding the connected device CD to a list of connected devices belonging to the same group G with an already authenticated subscription upon successful authentication, this list being called live instance of a group.

According to an example, the security context of a group comprises a data element corresponding to an updated version of KRG set of at least one security key in order to force the connected devices belonging to the same group to replace their current KRG key pair by this updated version.

According to an example, the method comprises the steps, when the registration of the connected device CD is successful, of verifying if the newly authenticated connected device is the first of group G to be registered, and If yes and if no set KRG is already available for this group, generating a set KRG of at least one security key ck associated to this group G.

According to an example, the method comprises the steps, when a given connected device is to be removed from a target group, of forcing by the wireless communication network all connected devices belonging to this target group to detach so that the step of authentication the subscription and the step of providing the connecting devices of the group with an updated set KRG of at least one security key are relaunched.

According to an example, the set KRG corresponds to a secret key enabling symmetric encryption, shared between the wireless communication network and the connected device CD and used to encipher and decipher the security context.

According to an example, the set KRG of at least one security key is transmitted by the wireless communication network to the connected device CD in a signalling message.

According to an example, the signalling message indicates that authentication of the subscription is successful.

According to an example, a Single Cell Point To Multipoint SC-PTM mechanism is used to broadcast the security context of the group of connected device.

According to an example, a scheduling information allowing the connected device CD to reach the security context of its group on the broadcast channel is transmitted within this signaling message.

According to an example, the scheduling information corresponds to a Radio Network Temporary Identifier of attributed to the group to which the connected device CD belongs.

The invention also relates to a network element, such as a server, comprising means for carrying out the steps of the method as described above.

The invention also relates to a computer program product comprising instructions which, when the program is executed by a computer, cause the computer to carry out the steps of the method as described above.

The invention also relates to a computer-readable storage medium comprising instructions which, when executed by a computer, cause the computer to carry out the steps of the method described above.

### BRIEF DESCRIPTION OF THE DRAWINGS

Additional features and advantages of the invention will be more clearly understandable after reading a detailed description of embodiments of the invention, given as an indicative and non-limitative examples, in conjunction with the following drawings:
- Figure 1 provides an example of telecommunication system allowing to share a security context associated to groups of devices;
- Figure 2 represents a flow chart showing a method allowing to create and maintain a live instance of a group of connected devices.

### DETAILED DESCRIPTION

One aim of the technology described hereinafter is to share a security context between a group of connected devices.

In this description, the expression connected device refers to a piece of equipment with communication capabilities and optionally capacity of data capture, data storage, sensing and/or actuating capabilities. A connected device comprises for example a wireless communication module also called Machine Type Communication (MTC) module allowing transmission of data from one connected device to a server or exchange of data between machines through UMTS/HSDPA, CDMA/EVDO, LTE, 5G, LoRa, WiFi or other networks.

A security context refers to a set of at least one data element enabling a given connected device and a wireless communication network to apply one or several technics allowing a secure exchange of data. As an example, a security context comprises a set of keys adapted to operate algorithms for preserving integrity, ciphering data exchanged between the one or several connected devices and the wireless communication network.

One important aspect of the invention is that a given security context can be shared by the wireless communication network with the one of several connected devices belonging to the same group. A given connected device belonging to this group is able to access to the corresponding data set once it has been correctly authenticated.

According to an aspect of the invention, a given connected device belonging to a group of connected devices is provisioned with a set of at least one key provided and possibly generated by a network element for this group after a first authentication. This set of at least one key enables the connected device to access the security context made available for the group. The security context is preferably transmitted enciphered. Therefore, enabling the access to the security context means, in the context of this invention, to allow the deciphering of a security context associated to a group by a connected device belonging to that group.

According to an example, the aforementioned set of at least one key is a secret key enabling symmetric encryption. However, the person skilled in the art will understand that another type of key, as those involved in a public key infrastructure (PKI) can also be used and that this set can be composed of a plurality of keys.

The network element can be for example a server operated by a wireless communication network operator (MNO) or by a service provider providing security services to wireless network of the MNO.

A group of devices refers to a plurality of connected devices sharing a particular characteristic. Each device can be individually distinguished by the service provider and/or by the wireless communication network.

According to an example, a group comprises a plurality of connected devices associated to the same group identifier chosen as a particular characteristic. For example a group can be defined at the network side by a group identifier associated to a list of subscriber identifier, for example a list of International Mobile Subscriber Identifiers (IMSI).

In case of a 5G system, the aforementioned group identifier can be an Internal-Group Identifier as defined in section 5.9.7 of the 3GPP technical specification TS 25.301 entitled "System Architecture for 5G Systems", V15.3.0.

Alternatively, a group can also be created using a real time interface set up between the network operated by the Mobile Network Operator (MNO) and a given service provider (SP).

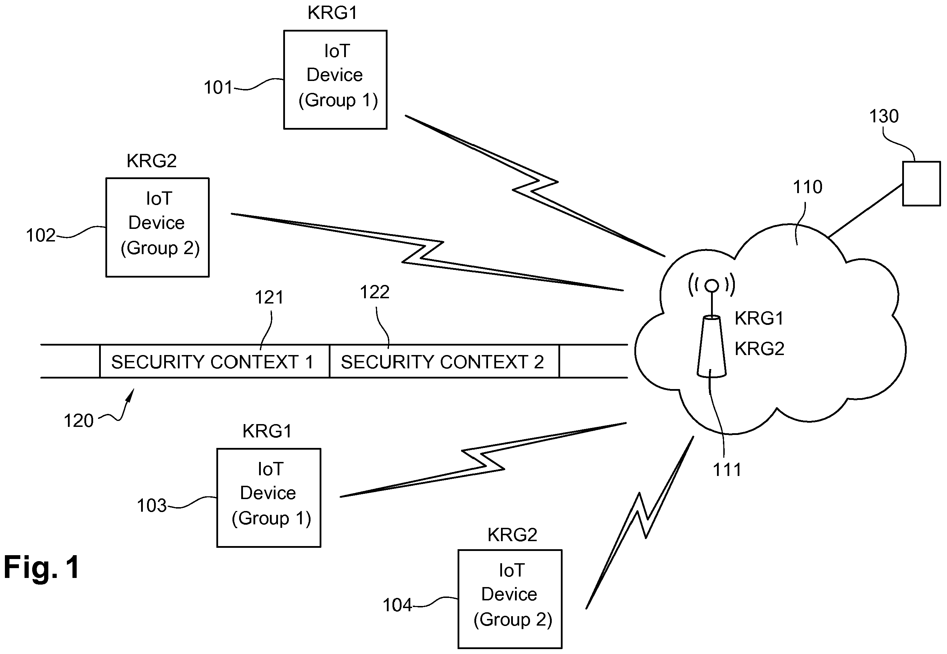

**Figure 1** provides an example of telecommunication system allowing to share a security context associated to groups of devices.

In this example, four connected devices are represented. Two of them 101, 103 are associated to a first group of connected devices and the other two 102, 104 are associated to a second group of connected devices.

The four connected devices 101-104 are able to communicate through a wireless communication network 110 operated by a Mobile Network Operator (MNO) which is represented in a very schematic way in Figure 1 as only a gNodeB (gNB) is represented 111. The skilled person will understand that this wireless communication network also comprises other equipment, although not represented, which can also be part of this network, such as those implementing a 5G NR and 5G core networks , such as described in section 4.2 of 3GPP technical specification TS 23.501, version 15.3.0.

One important aspect of the invention is the use of at least one broadcast channel 120 transmitted by the wireless communication network for sharing security contexts 121, 122 with their associated group of connected devices.

This broadcast channel enables to broadcast security contexts over a given geographical area, for example a cell or a group of cells as defined by the wireless communication network topology, but with a group-based content protection for a security context of a group to be accessible only to the connected devices belonging to this group.

According to an aspect of the invention, the content based protection is implemented by ciphering the security context of a group by the network before transmitting into a geographical area covered by the wireless communication network.

This ciphering operation is applied for example by using a secret key enabling symmetric encryption. This secret key is different for each group of connected devices. The keys of the different groups of connected devices are maintained in a database operated by the Mobile Network Operator (MNO) or by the service provider (SP). Each connected device belonging to a given group needs to be provisioned with the key pair attributed to their group for being able to acquire the security context broadcasted using the broadcast channel. It is to be noted that thanks to the invention, the security contexts are broadcasted in a given geographical area covered by the network operator. However, the security context allocated to a given group of connected devices is accessible in plaintext only to these connected devices and not to the connected devices present in the same geographical area but belonging to other groups. The skilled person will therefore understand that the aforementioned broadcast channel can be interpreted as being a multicast channel.

As an example, if the invention is implemented in an NB-IoT compliant communication system, the Single Cell Point To Multipoint (SC-PTM) can be efficiently used. In that case,_SC-PTM transfers the broadcast/multicast services using LTE downlink shared channel (DL-SCH) carried on by the Physical Downlink Shared Channel (PDSCH). It is scheduled using a Radio Network Temporary Identifier (RNTI) common for the whole group of connected device, and which can be designated as a Group-RNTI. The SC-PTM scheduling is agile and radio resources can advantageously be assigned dynamically in time and frequency domain that to the use of the Physical Downlink Control Channel (PDCCH) and based on real time traffic load on a Transmission Time Interval (TTI) basis.

In the example of figure 1, the connected devices 101, 103 belonging to the first group are provisioned with a secret key KRG1 and the connected devices 102, 104 belonging to the second group are provisioned with a secret key KRG2. Secret keys KRG1 and KRG1 are generated either by the wireless communication network operator or by a service provider cooperating with the wireless communication network operator.

The management of the groups of connected devices can be handled by network element 120. This network element can be a server responsible of maintaining lists of authenticated connected devices for each group as well as generating and providing KRG sets of keys for each groups.

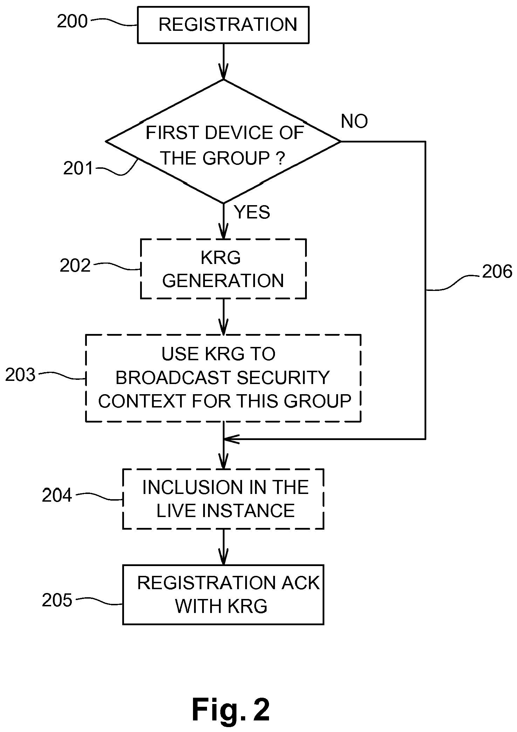

**Figure 2** represents a flow chart showing a method allowing to create and maintain a live instance of a group of connected devices.

In the description, a live instance of a group of connected devices refers to a group of connected devices sharing the same group identifier and provisioned with the needed secret key KRG needed for accessing the group security context. In other words, a live instance comprising a set of connected devices belonging to the same group and already registered by the wireless communication network.

According to the invention, KRG is a set of at least one key. This key can be a secret key enabling symmetric encryption. Another alternative is that this at least one key is designed to allow the derivation of a second key adapted to decipher the content of the security context. In this description, KRG is described as a single secret key, but KRG can correspond for example to a plurality of secret key and/or public keys or to other combinations of keys allowing access to the security context of the group to which the connected device belongs.

The steps of the method described hereinafter can be implemented by a network entity such as a server and operated by a wireless communication network operator or by a service provider cooperating with a given wireless communication network operator.

According to this example, the initial state of the communication system can be defined as follow:
- one or several group of connected devices are defined and known by the management server, a group being associated to a group identifier;
- a live instance is associate to each group and is initially void;
- ciphering is enabled on the network.

When a given subscriber is not yet registered on a given wireless communication network, a registration step 200 is carried out. Well known mutual authentication procedures based on a shared secret such as 5G AKA described in the 3GPP technical specification TS 33.501, version 15.2.0, section 6.1.3.2 can be carried out. The person skilled in the art will understand that other authentication procedures used for mobile wireless communication networks can also be considered in the context of this invention, using COMP128 or other implementations of A3.

When the registration 200 of a given connected device is successful, it is then verified by the network if this connected device is the first of a group to be registered. If yes, and if no key pair is already available for this group, a random secret key KRG is being generated.

According to another embodiment, KRG is pre-generated for all group of devices managed by the network.

At that time, it is possible to trigger by the wireless communication network operator the transmission 203 on a broadcast channel of the security context associated to any group with a live instance comprising at least one registered connected device.

Then, the newly registered connected device is added 204 to the live instance of its group. The live instance of a group corresponds for example to a list of connected device's identifiers, for example a list of International Mobile Equipment Identifier (IMEI) or a list of subscriber's identifier, for example a list of International Mobile Subscription Identifiers (IMSI).

The method also comprises a step for sending 205 by the network a signaling message indicating that the registration is accepted by the network. This message also comprises a set of at least one key allowing the connected device to decipher data broadcasted with the security context of the group to which it belongs. It corresponds for example to a secret key KRGi of the i-th group to which the newly registered connected device belongs. According to an example, a scheduling information allowing the connected device to reach the security context of its group on the broadcast channel is also transmitted within this signaling message or in another message. This scheduling information corresponds for example to a Group-RNTI in case SC-PTM is used.

In case the connected device requesting to be registered belongs to a group associated to a live instance which already comprises at least one device identifier, which means that another connected device is already registered, steps 202 and 203 can be skipped, as the KRG key for this group has already been generated and the broadcast for the security context for this group is likely to have already been triggered.

In a 3GPP security schemes, such as the one considered for 5G, several security keys are derived after correct authentication. So, according to an embodiment of the invention, the additional inputs such as AK needed to derive other security keys are broadcasted as part of the security context associated to a given group.

Alternatively or in complement, additional keys which are traditionally derived by the connected device from the aforementioned keys and data can also be broadcasted by the network as part of the security context of a group. For example, one or several of the following keys can be transmitted as part of the security context of a group:
- K_{RRC-enc};
- K_{RRC-int};
- K_{UP-enc};
- K_{UP-int};
- K_{NAS-enc};
- K_{NAS-int}

A detailed definition and description of these keys is provided in 3GPP technical specification 3GPP technical specification TS 33.501, version 15.2.0.

According to an embodiment, a connected device belonging to group i then uses KRG key associated to this group to decipher the broadcast channel to retrieve the transmitted security context.

The security context of a group can comprise different types of data elements in complement or alternatively to those which have been already mentioned in this description. The skilled person will appreciate that the set of data elements comprised in a given security context of a group may comprise various combinations of data elements depending on the use case. For example, a particular secret key can be part of the security context for it to be used for ciphering data associated to a particular application or service. According to another aspect of the invention, live configuration parameters for one or several applications can also be part of the security context.

Advantageously, for further signaling non-access stratum (NAS) exchanges, including following registrations, both devices and network are supposed to use KRG associated security context without any new authentication nor key renewal.

According to an example, the security context of a group can comprise a data element corresponding to an updated version of the KRG set in order to force the connected devices belonging to the same group to replace their current KRG key pair by this updated version. Advantageously, this capacity enables changing group key or keys once for the whole group using broadcast channel, therefore reducing drastically the amount of signaling required for that purpose.

In case the wireless communication network operator or the service provider decides to repudiate an connected device, or if a given connected device leaves the group, then the KRG key and the associated security context for this group need to be considered as deprecated and the procedure needs to restart. According to one aspect of the invention, the procedure can be restarted by forcing by the network all connected devices belonging to the targeted group to detach, coming back to the initial conditions. This means that the live instance of this group is then empty and that the connected devices need to register and authenticate to be once more part of the live instance.

The technology described in this specification advantageously allows an easier management of security parameters and keys life cycles attributed specifically for groups of connected devices.

According to an aspect of the invention, a given key KRG can be attributed for a group with a given validity time period, and this validity time period can be chosen different for the other groups depending of the usages or services for which the connected devices of a group are involved.

Further, it is to be noted that KRG can be advantageously used as a long live key which allows reaching a high level of security.

## Claims

1. A method for sharing by a wireless communication network (110) a security context with a plurality of connected devices belonging to a group, the security context comprising at least one data element used to secure data exchanges between the connected devices and the wireless communication network, the security context being broadcasted enciphered by the wireless communication network using a broadcast channel (120) such that only the connected devices belonging to the same group are able to read it, the method comprising the following steps:
- authenticating (200) a subscription used by a given connected device CD requesting access to the wireless communication network (110) and belonging to a given group G, the connected device CD being considered as registered by the network in case of successful authentication;
- providing (204) the registered connected device CD with a set KRG of at least one security key associated to this group G, this set KRG allowing the connected device G to decipher the at least one data element of the security context associated to group G, and to use the at least one data element to exchange data with the network without requiring further authentication.

2. The method according to claim 1, wherein a group comprises a plurality of connected devices associated to a group identifier identical for all members of the group.

3. The method according to any of the preceding claims, wherein a group is managed by a network element belonging to the wireless communication network using a list of subscriber identifier.

4. The method according to claim 3, wherein the subscription identifiers of said list are International Mobile Subscriber Identifiers (IMSI).

5. The method according to any of the preceding claims, comprising the step of adding (204) the connected device CD to a list of connected devices belonging to the same group G with an already authenticated subscription upon successful authentication (200), this list being called live instance of a group.

6. The method according to any of the preceding claims, wherein the security context of a group comprises a data element corresponding to an updated version of KRG set of at least one security key in order to force the connected devices belonging to the same group to replace their current KRG key pair by this updated version.

7. A method according to any of the preceding claims, comprising the steps, when the registration (200) of the connected device CD is successful, of verifying (201) if the newly authenticated connected device is the first of group G to be registered, and If yes and if no set KRG is already available for this group, generating (202) a set KRG of at least one security key ck associated to this group G.

8. A method according to any of the preceding claims, comprising the steps, when a given connected device is to be removed from a target group, of forcing by the wireless communication network (110) all connected devices belonging to this target group to detach so that the step of authentication (200) the subscription and the step of providing (204) the connecting devices of the group with an updated set KRG of at least one security key are relaunched.

9. A method according to any of the preceding claims, wherein the set KRG corresponds to a secret key enabling symmetric encryption, shared between the wireless communication network and the connected device CD and used to encipher and decipher the security context.

10. The method according to any of the preceding claims, wherein the set KRG of at least one security key is transmitted by the wireless communication network to the connected device CD in a signalling message.

11. The method according to claim 10, wherein the signalling message indicates that authentication of the subscription is successful.

12. The method according to any of the previous claims, wherein a Single Cell Point To Multipoint SC-PTM mechanism is used to broadcast the security context of the group of connected device.

13. The method according to any of Claims 10 to 12, wherein a scheduling information allowing the connected device CD to reach the security context of its group on the broadcast channel is transmitted within this signaling message.

14. The method according to Claims 12 and 13, wherein this scheduling information corresponds for example to a Radio Network Temporary Identifier of attributed to the group to which the connected device CD belongs.

15. A network element, such as a server, comprising means for carrying out the steps of the method according to any of the preceding claims.

16. A computer program product comprising instructions which, when the program is executed by a computer, cause the computer to carry out the steps of the method of any of claims 1 to 14.

17. A computer-readable storage medium comprising instructions which, when executed by a computer, cause the computer to carry out the steps of the method of any of claims 1 to 14.
